# EUROPEAN PATENT SPECIFICATION

(11) **EP 3 732 957 B1**
(45) Date of publication and mention of the grant of the patent: **13.10.2021**
(21) Application number: 18897119.6
(22) Date of filing: 28.11.2018
(51) Int. Cl.: A01G 9/24, A01G 7/00

(54) **INFORMATION PROCESSING DEVICE AND INFORMATION PROCESSING METHOD**
INFORMATIONSVERARBEITUNGSVORRICHTUNG UND INFORMATIONSVERARBEITUNGSVERFAHREN
DISPOSITIF DE TRAITEMENT D'INFORMATIONS ET PROCÉDÉ DE TRAITEMENT D'INFORMATIONS

(30) Priority: 26.12.2017 JP 2017248707
(43) Date of publication of application: 04.11.2020
(73) Proprietor: Bayer CropScience K.K., Tokyo 100-8268 (JP)
(72) Inventor: ITO, Satoshi, Tokyo 150-8360 (JP); MORI, Asako, Tokyo 150-8360 (JP)
(74) Representative: BIP Patents
(86) International application number: PCT/JP2018/043653
(87) International publication number: WO 2019/130953

(56) References cited:
- GB-A- 2 073 911
- JP-A- 2017 038 547
- JP-A- 2017 112 916
- JP-B2- 2 835 192
- JP-B2- 3 574 949
- JP-U- S 598 567
- JP-Y2- H0 440 450

## Description

### Technical Field

The present invention relates to an information processing apparatus and an information processing method.

### Background Art

In recent years, in greenhouse horticulture, a computer-based system has been developed for visualizing the environment in a greenhouse or controlling the environment in the greenhouse. For example, there is a system including sensors, such as a temperature sensor and a humidity sensor, and an information processing apparatus for analyzing or controlling an environment in a greenhouse based on measurement data obtained by these sensors.

Dew condensation on cultivated products is known as a disease risk in greenhouse horticulture. When cultivated products are wet for a long time due to dew condensation on the cultivated products, hyphae attached to the cultivated products grow and the risk of infection increases. In this regard, PTL 1 discloses a control device that makes a determination regarding dew condensation using measurement data obtained by a temperature sensor and a humidity sensor.

### Citation List

### Patent Literature

PTL 1: JP-A-2017-112916

### Summary of Invention

### Technical Problem

The dew condensation on cultivated products is caused, in particular, by a sudden rise in temperature due to solar radiation in the morning. However, a rise in the temperature in the measurement result of the temperature sensor provided in the greenhouse may be delayed from a rise in the actual temperature around cultivated products in the greenhouse. In that case, in a method of estimating the dew condensation state using only the temperature sensor and the humidity sensor, the accuracy of estimating the dew condensation state is lowered.

Therefore, the invention has been made in view of the aforementioned problem, and it is an object of the invention to provide a new and improved information processing apparatus and information processing method capable of improving the accuracy of estimating the dew condensation state.

### Solution to Problem

In order to solve the problem, according to an aspect of the invention, there is provided an information processing apparatus including: a data acquisition unit that acquires solar radiation amount data indicating an amount of solar radiation to a greenhouse measured by a solar radiation amount sensor and relative humidity data indicating a relative humidity in the greenhouse; and an estimation unit that estimates a dew condensation state in a cultivated product in the greenhouse based on the solar radiation amount data and the relative humidity data.

In addition, in order to solve the problem, according to another aspect of the invention, there is provided an information processing method including: acquiring solar radiation amount data indicating an amount of solar radiation to a greenhouse measured by a solar radiation amount sensor and relative humidity data indicating a relative humidity in the greenhouse; and estimating a dew condensation state in a cultivated product in the greenhouse based on the solar radiation amount data and the relative humidity data.

### Advantageous Effects of Invention

According to the invention described above, it is possible to improve the accuracy of estimating the dew condensation state.

### Brief Description of Drawings

Fig. 1 is an explanatory diagram illustrating a greenhouse management system according to an embodiment of the invention.
Fig. 2 is an explanatory diagram illustrating a specific example of a screen displayed on a display unit of a user apparatus.
Fig. 3 is an explanatory diagram illustrating a relationship between the solar radiation amount and the temperature.
Fig. 4 is an explanatory diagram illustrating the configuration of a management server according to the embodiment of the invention.
Fig. 5 is a flowchart illustrating the operation of the management server in a learning stage.
Fig. 6 is a flowchart illustrating the operation of the management server in an operation stage.
Fig. 7 is a block diagram illustrating the hardware configuration of the management server.

### Description of Embodiments

Hereinafter, an embodiment of the invention will be described in detail with reference to the diagrams. In addition, in the specification and the diagrams, components having substantially the same functional configuration are denoted by the same reference numerals, and repeated description thereof will be omitted.

### <1. Overview of greenhouse management system>

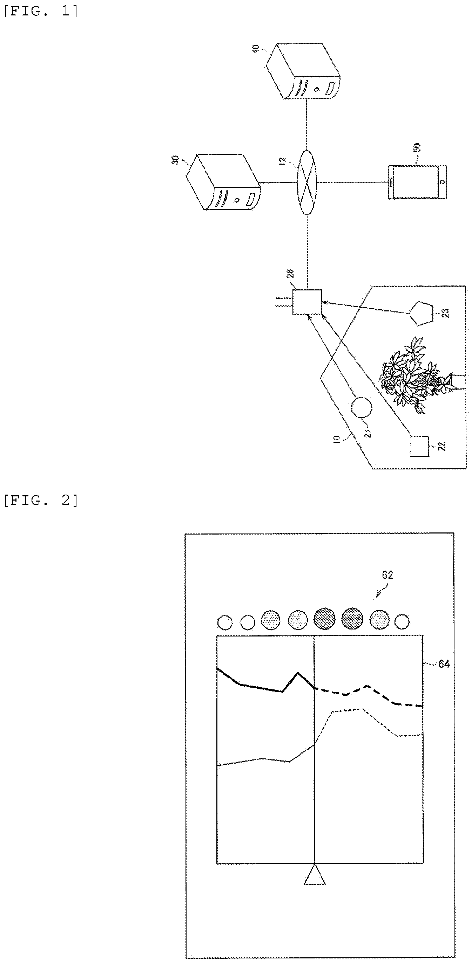

An embodiment of the invention relates to a greenhouse management system for managing the environment of a greenhouse where crops are grown. An outline of the greenhouse management system according to the embodiment of the invention will be described with reference to Fig. 1.

Fig. 1 is an explanatory diagram illustrating the greenhouse management system according to the embodiment of the invention. As illustrated in Fig. 1, the greenhouse management system according to the embodiment of the invention includes a greenhouse 10, a plurality of sensors 21 to 23, a communication apparatus 26, a weather information server 30, a management server 40, and a user apparatus 50. The management server 40 is connected to the communication apparatus 26, the weather information server 30, and the user apparatus 50 through a network 12.

### (Greenhouse 10)

The greenhouse 10 forms a space for growing crops and the like. As a building material for the greenhouse 10, a transparent building material such as glass or vinyl is used. Therefore, the crops cultivated in the greenhouse 10 can grow in an appropriate temperature environment while being exposed to sunlight. The greenhouse 10 may have a heating facility or may not have a heating facility. Cultivated products cultivated in the greenhouse 10 are not limited to the crops, and the cultivated products cultivated in the greenhouse 10 may be plants other than the crops.

In the greenhouse 10, the plurality of sensors 21 to 23 are provided. Specifically, a temperature sensor 21, a solar radiation amount sensor 22, and a humidity sensor 23 are provided in the greenhouse 10. The temperature sensor 21 measures the temperature in the greenhouse, the solar radiation amount sensor 22 measures the amount of solar radiation to the greenhouse, and the humidity sensor 23 measures the relative humidity in the greenhouse. Although the solar radiation amount sensor 22 is provided in the greenhouse 10 in Fig. 1, the solar radiation amount sensor 22 may be provided outside the greenhouse 10. In addition, other sensors, such as a carbon dioxide concentration sensor, a wind speed sensor, and a ground temperature sensor, may be provided in the greenhouse 10.

The plurality of sensors 21 to 23 wirelessly transmit measurement data, such as temperature data, solar radiation amount data, or relative humidity data acquired by measurement, to the communication apparatus 26. For example, the plurality of sensors 21 to 23 may transmit the measurement data to the communication apparatus 26 using Bluetooth (registered trademark) Low Energy (BLE) or Wi-Fi. Alternatively, the plurality of sensors 21 to 23 may be connected to the communication apparatus 26 by wire. In this case, the plurality of sensors 21 to 23 transmit the measurement data to the communication apparatus 26 by wire.

### (Communication apparatus 26)

The communication apparatus 26 relays measurement data between the plurality of sensors 21 to 23 and the management server 40. That is, the communication apparatus 26 receives measurement data from the plurality of sensors 21 to 23, and transmits the received measurement data to the management server 40 through the network 12. In addition, the network 12 is a wired or wireless transmission path for information transmitted from an apparatus connected to the network 12. For example, the network 12 may include a public network such as a cellular network, the Internet, a telephone network, and a satellite communication network, various Local Area Networks (LANs) including the Ethernet (registered trademark), and a Wide Area Network (WAN). In addition, the network 12 may include a dedicated line network, such as an Internet Protocol-Virtual Private Network (IP-VPN).

### (Weather information server 30)

The weather information server 30 provides weather information to the management server 40. The weather information includes weather observation information actually observed in the past or the present and weather forecast information predicted to be observed from now on. The weather information may include information indicating the temperature, the relative humidity, the solar radiation amount, or the rainfall for each region.

### (Management server 40)

The management server 40 is an information processing apparatus having a function of collecting various kinds of information for managing the greenhouse 10, a function of analyzing the collected information, and a function of distributing the collected information or the information analysis result. Specifically, the management server 40 collects measurement data from the communication apparatus 26, and collects weather information from the weather information server 30. The management server 40 can analyze the collected information, predict the future internal environment of the greenhouse 10, and determine the disease risk. The management server 40 distributes, through the network 12, the collected information, the prediction result, the determination result, and the like to the user apparatus 50 used by a farmer user.

### (User apparatus 50)

The user apparatus 50 is an apparatus used by a user as a farmer who grows crops in the greenhouse 10. The user apparatus 50 has a display unit for displaying information distributed from the management server 40. Although a smartphone is illustrated as an example of the user apparatus 50 in Fig. 1, the user apparatus 50 is not limited to the smartphone. The user apparatus 50 may be, for example, an information processing apparatus, such as a Personal Computer (PC), a mobile phone, or a dedicated apparatus.

Fig. 2 is an explanatory diagram illustrating a specific example of a screen displayed on the display unit of the user apparatus 50. The screen illustrated in Fig. 2 includes a display 62 indicating the disease risk and a display 64 indicating temporal changes in the temperature and the relative humidity. In the display 62, the size of the disease risk at each point in time is indicated by the size and color of a circle. In the example illustrated in Fig. 2, a larger and darker circle is displayed as the disease risk becomes higher. By viewing the display 62, the user can perform an operation for reducing the disease risk, such as spraying of medicine, adjustment of heating, and ventilation of the greenhouse 10. In addition, an apparatus provided in the greenhouse 10 may perform environmental control, such as adjustment of heating and adjustment of the amount of generated carbon dioxide, and processing, such as spraying of medicine, according to an instruction from the management server 40.

In the display 64, the thin solid line indicates a measured value of the temperature, the thin broken line indicates a predicted value of the temperature, the thick solid line indicates a measured value of the relative humidity, and the thick broken line indicates a predicted value of the relative humidity. The user can grasp the current environment and the future environment of the greenhouse 10 based on the display 64.

Fig. 2 illustrates an example in which information indicating the disease risk, the temperature, and the relative humidity is displayed. However, the user apparatus 50 can also display information indicating other environmental elements, such as the solar radiation amount or the carbon dioxide concentration, based on communication with the management server 40. In addition, when a plurality of greenhouses 10 are provided, the user apparatus 50 can display information for each greenhouse 10, and can also display information for each location in the greenhouse 10 or for each sensor. Therefore, when the current environment or the future environment is not suitable for cultivation of the crops, the user can perform adjustment of heating, adjustment of the amount of generated carbon dioxide, and the like.

### <2. Arrangement of background>

The outline of the greenhouse management system according to the embodiment of the invention has been described above. Subsequently, in order to clarify the technical significance of the embodiment of the invention, the background of the embodiment of the invention will be described prior to the detailed description of the embodiment of the invention.

Dew condensation on cultivated products is known as a cause of a disease occurring in a greenhouse. When the cultivated products are wet for a long time due to the dew condensation on the cultivated products, hyphae attached to the cultivated products grow and the risk of infection increases.

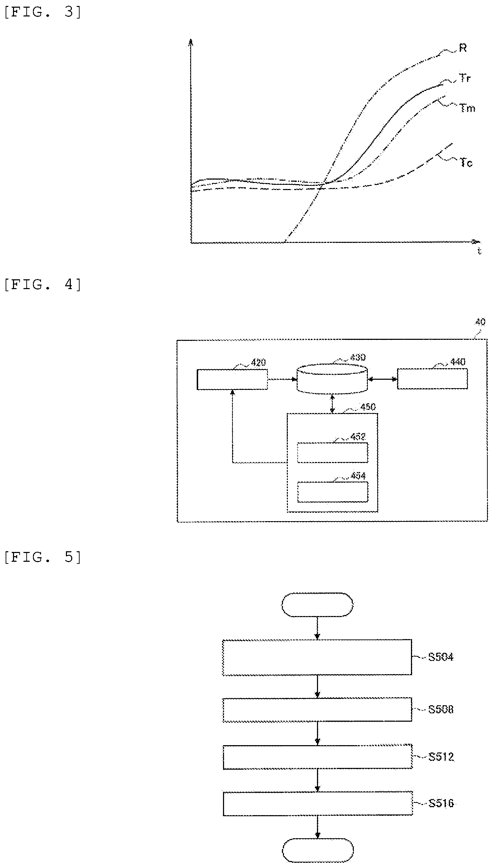

The dew condensation is caused, in particular, by a sudden rise in temperature due to solar radiation in the morning or by accumulation of moisture in a state in which a window is closed. Here, the relationship between the solar radiation amount and the temperature will be described with reference to Fig. 3.

Fig. 3 is an explanatory diagram illustrating the relationship between the solar radiation amount and the temperature. As illustrated in Fig. 3, as a solar radiation amount R increases, an actual temperature Tr in the greenhouse rises later than the rise in the solar radiation amount R. As the temperature Tr rises, the relative humidity decreases, and the temperature of building materials forming the greenhouse rises. In particular, in a greenhouse in which a ventilation window is closed, the humidity is kept close to 100% due to an increase in transpiration in which water vapor of plants is released by solar radiation and volatilization of the water surface on the soil surface. On the other hand, the specific heat of a cultivated product containing a lot of moisture is higher than that of other objects, such as building materials. For this reason, a rise in the temperature of the cultivated product is more difficult than a rise in the temperature of other objects, so that the temperature of the cultivated product rises further later than the rise in the temperature Tr as shown by a temperature Tc in Fig. 3. In this case, it is thought that, since the air temperature near the cultivated product is relatively low, the relative humidity reaches 100% near the cultivated product and accordingly, dew condensation concentrates on the cultivated product.

In order to accurately determine the disease risk, it is desired to estimate the occurrence of dew condensation due to the solar radiation with high accuracy. In this regard, a method of estimating the occurrence of dew condensation using the temperature measured by the temperature sensor and the relative humidity measured by the humidity sensor can be considered. However, a rise in the temperature in the measurement result of the temperature sensor provided in the greenhouse may be delayed from a rise in the actual temperature around cultivated products in the greenhouse. For example, the temperature in the greenhouse is not constant, and the range in which the temperature rises due to the morning sun gradually increases in the greenhouse. In addition, a delay may occur until the actual temperature is reflected on the measurement result of the temperature sensor. As a result, like a temperature Tm illustrated in Fig. 3, a rise in the temperature Tm, which is the measurement result of the temperature sensor, may be delayed from the rise in the actual temperature Tr. Therefore, in the method of estimating the dew condensation state using only the temperature sensor and the humidity sensor, the reliability of the estimation result is not sufficient.

In addition, a method of introducing a wet sensor can also be considered. However, introducing a wet sensor in the operation stage has problems from the viewpoints of the purchase cost of the wet sensor, maintenance, a method of using measurement data, and the like.

The inventor of the invention has created the embodiment of the invention with the above circumstances in mind. According to the embodiment of the invention, it is possible to improve the accuracy of estimating the dew condensation state without using a wet sensor in the operation stage. Hereinafter, the configuration and operation of the embodiment of the invention will be sequentially described in detail.

### <3. Configuration of management server>

Fig. 4 is an explanatory diagram illustrating the configuration of the management server 40 according to the embodiment of the invention. As illustrated in Fig. 4, the management server 40 according to the embodiment of the invention includes a communication unit 420, a storage unit 430, a learning unit 440, and an analysis unit 450.

### (Communication unit 420)

The communication unit 420 is an interface for communication with another apparatus. For example, the communication unit 420 functions as a data acquisition unit that receives measurement data, such as solar radiation amount data, temperature data, and relative humidity data, from the communication apparatus 26 and receives weather information from the weather information server 30. In addition, the communication unit 420 also has a function as a transmission unit that transmits a prediction result and a determination result using measurement data and the like to the user apparatus 50.

### (Storage unit 430)

The storage unit 430 stores the measurement data received from the communication apparatus 26 and the weather information received from the weather information server 30. The storage unit 430 also stores a wetting amount calculation model generated by the learning unit 440 described below.

### (Learning unit 440)

The learning unit 440 generates a wetting amount calculation model, which is for outputting the wetting amount (dew condensation state) of the cultivated product using measurement data, such as solar radiation amount data, temperature data, and relative humidity data, as input data, by machine learning.

Specifically, in the learning stage, a wet sensor is attached to the cultivated product in the greenhouse 10, and the management server 40 acquires wetting amount data measured by the wet sensor in addition to the solar radiation amount data, the temperature data, and the relative humidity data. Then, the learning unit 440 generates a wetting amount calculation model by performing machine learning using the solar radiation amount data, the temperature data, and the relative humidity data as input data and using the wetting amount data as teacher data.

As a result, as the wetting amount calculation model, a model is obtained in which not only the temperature and the relative humidity but also physical quantities such as absolute humidity, dew point temperature, a difference between air temperature and dew point temperature, and saturation, these physical quantities at the previous time, differences between these physical quantities between the previous time and the current time, a wetting amount at the previous time, and the like are taken into consideration.

In addition, in the machine learning, the solar radiation amount data is also used as input data as described above. As described with reference to Fig. 3, a rise in the temperature in the measurement result of the temperature sensor 21 provided in the greenhouse 10 may be delayed from a rise in the actual temperature around cultivated products in the greenhouse 10. On the other hand, the solar radiation amount increases before the rise in the actual temperature around the cultivated product in the greenhouse 10. Therefore, the effect of improving the accuracy of estimating the actual temperature can be obtained by performing machine learning with even the solar radiation amount data before the current time as input data. As a result, even in the operation stage, it is expected that the accuracy of estimating the wetting amount will be improved by using the solar radiation amount data as input data.

In addition, the learning unit 440 may also perform machine learning by additionally using at least one of the time zone, the density of cultivated products, the area of the greenhouse 10, weather information, a blowing condition in the greenhouse 10, and a ventilation condition in the greenhouse 10 as input data. With this configuration, it is possible to further improve the accuracy of estimating the wetting amount using the wetting amount model. In addition, a linear model, a Kalman filter, or a neural network (for example, a recurrent neural network and deep learning) may be used as machine learning methods. In addition, a wetting amount calculation model generated by machine learning for a certain greenhouse 10 may be used in the operation stage of the greenhouse 10, or may be used in the operation stage of another greenhouse 10.

### (Analysis unit 450)

The analysis unit 450 has a function of analyzing measurement data and the like stored in the storage unit 430 in the operation stage. Specifically, the analysis unit 450 has functions of a dew condensation estimation unit 452 and a disease risk determination unit 454 as illustrated in Fig. 4.

The dew condensation estimation unit 452 estimates the wetting amount of a cultivated product, as a dew condensation state in the cultivated product in the greenhouse 10, based on the solar radiation amount data, the temperature data, and the relative humidity data. Specifically, the dew condensation estimation unit 452 estimates the wetting amount of the cultivated product by applying the solar radiation amount data, the temperature data, and the relative humidity data as input data to the wetting amount calculation model stored in the storage unit 430.

In the wetting amount calculation model, measurement data such as solar radiation amount data, temperature data, and relative humidity data for the latest predetermined time may be used. With this configuration, it is possible to calculate the amount of wetting in consideration of the accumulation of wetting in the cultivated product. In addition, since it is thought that the condition before the predetermined time (for example, 1 hour and 2 hours) has little effect on the current amount of wetting, it is possible to realize highly accurate estimation and reduce the processing load by not using measurement data older than the predetermined time as described above.

In addition, when the wetting amount calculation model is generated by learning using the density of cultivated products, the area of the greenhouse 10, weather information, a blowing condition in the greenhouse 10 or a ventilation condition in the greenhouse 10, and the like as additional input data, the density of cultivated products, the area of the greenhouse 10, the weather information, the blowing condition in the greenhouse 10 or the ventilation condition in the greenhouse 10, and the like may also be applied to the wetting amount calculation model as additional input data in the operation stage.

The disease risk determination unit 454 determines the disease risk of the cultivated product based on the amount of wetting of the cultivated product estimated by the dew condensation estimation unit 452. For example, the disease risk determination unit 454 may determine the disease risk of the cultivated product based on how much and for how long the cultivated product has been wetted. The determination result of the disease risk determination unit 454 is transmitted to the user apparatus 50 by the communication unit 420, and is displayed on the user apparatus 50 as illustrated in Fig. 2.

### <4. Operation of management server>

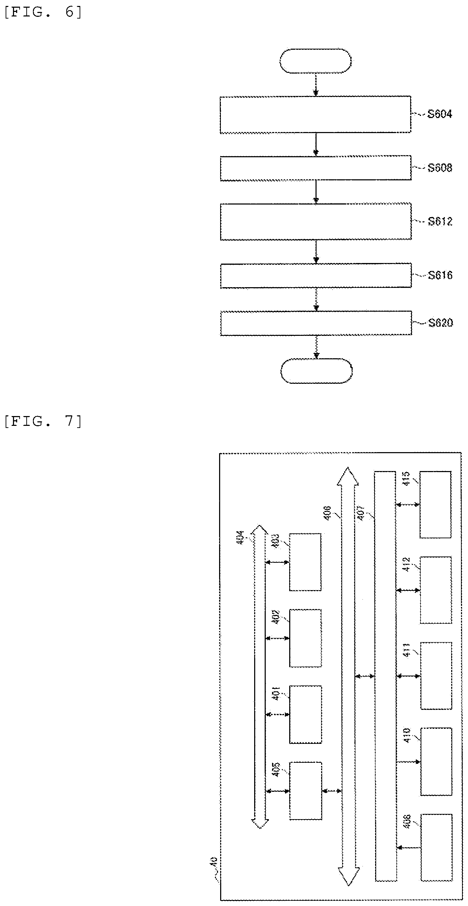

Up to now, the configuration of the management server 40 according to the embodiment of the invention has been described. Subsequently, the operation of the management server 40 according to the embodiment of the invention will be described with reference to Figs. 5 and 6.

Fig. 5 is a flowchart illustrating the operation of the management server 40 in the learning stage. First, the learning unit 440 of the management server 40 reads solar radiation amount data, temperature data, and relative humidity data from the storage unit 430 as input data (S504). In addition, the learning unit 440 reads wetting amount data from the storage unit 430 as teacher data (S508).

Then, the learning unit 440 generates a wetting amount calculation model by performing machine learning using the solar radiation amount data, the temperature data, and the relative humidity data as input data and using the wetting amount data as teacher data (S512). Thereafter, the storage unit 430 stores the wetting amount calculation model generated by the learning unit 440 (S516).

Fig. 6 is a flowchart illustrating the operation of the management server 40 in the operation stage. As illustrated in Fig. 6, first, the dew condensation estimation unit 452 of the management server 40 reads solar radiation amount data, temperature data, and relative humidity data from the storage unit 430 as input data (S604). Subsequently, the dew condensation estimation unit 452 reads a wetting amount calculation model from the storage unit 430 (S608).

Then, the dew condensation estimation unit 452 estimates the wetting amount of the cultivated product by applying the solar radiation amount data, the temperature data, and the relative humidity data as input data to the wetting amount calculation model (S612).

In addition, the disease risk determination unit 454 determines the disease risk of the cultivated product based on the amount of wetting of the cultivated product estimated by the dew condensation estimation unit 452 (S616). Thereafter, the communication unit 420 transmits disease risk information, which is the determination result of the disease risk determination unit 454, to the user apparatus 50 (S620) .

### <5. Operational effect>

As described above, the dew condensation estimation unit 452 according to the embodiment of the invention estimates the wetting amount using the solar radiation amount data in addition to the temperature data and the relative humidity data. Therefore, it is possible to estimate the amount of wetting with high accuracy without using a wetting amount sensor in the operation stage. As a result, the disease risk determination unit 454 can also determine the disease risk with high accuracy.

### <6. Modification examples>

Up to now, the embodiment of the invention has been described above. Hereinafter, some modification examples of the embodiment of the invention will be described. In addition, each of the modification examples described below may be applied to the embodiment of the invention alone, or may be applied to the embodiment of the invention in combination. In addition, each of the modification examples may be applied instead of the configuration described in the embodiment of the invention, or may be additionally applied to the configuration described in the embodiment of the invention.

### (First modification example)

Although the example in which the wetting amount calculation model is generated by machine learning has been described above, the method of generating the wetting amount calculation model is not limited to machine learning. The wetting amount calculation model may be a model derived by other methods, such as a statistical analysis of solar radiation amount data, temperature data, relative humidity data, and wetting amount data.

### (Second modification example)

Although the example of estimating the wetting amount using the solar radiation amount data, the temperature data, and the relative humidity data has been described above, the temperature data may not be used as input data for estimating the wetting amount. Since the temperature depends on the solar radiation amount, it is possible to estimate the amount of wetting by using the solar radiation amount data even if the temperature data is not used.

### <7. Hardware configuration>

The information processing such as the machine learning and the estimation of the wetting amount in the management server 40 described above is realized by cooperation between software and hardware of the management server 40 described below.

Fig. 7 is a block diagram illustrating the hardware configuration of the management server 40. The management server 40 includes a Central Processing Unit (CPU) 401, a Read Only Memory (ROM) 402, a Random Access Memory (RAM) 403, and a host bus 404. The management server 40 includes a bridge 405, an external bus 406, an interface 407, an input device 408, an output device 410, a memory 411, a drive 412, and a communication apparatus 415.

The CPU 401 functions as an arithmetic processing device and a control device, and controls overall operations in the management server 40 according to various programs. In addition, the CPU 401 may be a microprocessor. The ROM 402 stores programs, operation parameters, and the like used by the CPU 401. The RAM 403 temporarily stores programs used in the execution of the CPU 401, parameters that appropriately change in the execution, and the like. These are connected to each other by the host bus 404 including a CPU bus and the like. The functions of the learning unit 440 and the analysis unit 450 described with reference to Fig. 4 can be realized by cooperation between the CPU 401, the ROM 402, the RAM 403, and the software.

The host bus 404 is connected to the external bus 406, such as a Peripheral Component Interconnect/Interface (PCI) bus, through the bridge 405. In addition, the host bus 404, the bridge 405, and the external bus 406 do not necessarily need to be separately configured, and these functions may be implemented on one bus.

The input device 408 is configured to include input means for inputting information by a user, such as a mouse, a keyboard, a touch panel, a button, a microphone, a switch, and a lever, and an input control circuit that generates an input signal based on the input by the user and outputs the input signal to the CPU 401. By operating the input device 408, the user of the management server 40 can input various kinds of data to the management server 40 or give an instruction to perform a processing operation.

The output device 410 includes a display device, such as a Cathode Ray Tube (CRT) display device, a liquid crystal display (LCD) device, an Organic Light Emitting Diode (OLED) device, and a lamp. In addition, the output device 410 includes an audio output device, such as a speaker and a headphone. The output device 410 outputs, for example, the reproduced content. Specifically, the display device displays various kinds of information, such as reproduced video data, as text or an image. On the other hand, the audio output device converts reproduced audio data or the like into audio and outputs the audio.

The memory 411 is a device for storing data, and corresponds to the storage unit 430 described with reference to Fig. 4. The memory 411 may include a storage medium, a recording device for recording data on the storage medium, a reading device for reading data from the storage medium, a deletion device for deleting data recorded on the storage medium, and the like. The memory 411 is configured by, for example, a Hard Disk Drive (HDD). The memory 411 drives the hard disk to store programs executed by the CPU 401 or various kinds of data.

The drive 412 is a reader writer for a storage medium, and is built in or externally attached to the management server 40. The drive 412 reads information recorded on a removable storage medium, such as a mounted magnetic disk, optical disk, magneto-optical disk, or semiconductor memory, and outputs the information to the RAM 403. In addition, the drive 412 can also write information on a removable storage medium.

The communication apparatus 415 is, for example, a communication interface configured by a communication device for making a connection to the network 12, and corresponds to the communication unit 420 described with reference to Fig. 4. In addition, the communication apparatus 415 may be a wireless Local Area Network (LAN) compliant communication apparatus, a Long Term Evolution (LTE) compliant communication apparatus, or a wired communication apparatus for performing wired communication.

### <8. Supplement>

While the preferred embodiment of the invention has been described in detail with reference to the accompanying diagrams, the invention is not limited to such examples. It is obvious that those skilled in the art to which the invention belongs can conceive various changes or modifications within the scope of the technical idea described in the claims, and it is understood that these also belong to the technical scope of the invention.

For example, the respective steps in the processing of the management server 40 in the present specification do not necessarily need to be processed in time series in the order described in the flowchart. For example, the respective steps in the processing of the management server 40 may be processed in an order different from the order described in the flowchart, or may be processed in parallel.

In addition, a computer program for causing hardware, such as the CPU 401, the ROM 402, and the RAM 403 built in the management server 40, to execute the same functions as those of the components of the management server 40 can also be created. In addition, a storage medium storing the computer program is provided.

## Claims

1. An information processing apparatus, comprising:
a data acquisition unit (420) configured to acquire solar radiation. amount data indicating an amount of solar radiation to a greenhouse (10) measured by a solar radiation amount sensor (22) and relative humidity data indicating a relative humidity in the greenhouse; and
an estimation unit (452),
**characterised in that** the estimation unit (452) is configured to estimate a dew condensation state in a cultivated product in the greenhouse (10) based on the solar radiation amount data and the relative humidity data.

2. The information processing apparatus according to claim 1,
wherein the data acquisition unit is further configured to acquire temperature data indicating a temperature in the greenhouse, and
the estimation unit is configured to estimate the dew condensation state based on the temperature data in addition to the solar radiation amount data and the relative humidity data.

3. The information processing apparatus according to claim 1 or 2,
wherein the estimation unit is configured to estimate the dew condensation state based on the solar radiation amount data and the relative humidity data for a latest predetermined time.

4. The information processing apparatus according to any one of claims 1 to 3, further comprising:
a learning unit configured to perform machine learning using the solar radiation amount data and the relative humidity data as input data and using measurement data on the dew condensation state in the cultivated product as teacher data,
wherein the estimation unit is configured to estimate the dew condensation state by applying the solar radiation amount data and the relative humidity data to a model obtained by the learning unit.

5. The information processing apparatus according to any one of claims 1 to 4,
wherein the estimation unit is further configured to estimate the dew condensation state based on at least one of a density of the cultivated product, an area of the greenhouse, weather information, a blowing condition in the greenhouse, and a ventilation condition in the greenhouse.

6. The information processing apparatus according to any one of claims 1 to 5, further comprising:
a disease risk determination unit configured to determine a disease risk of the cultivated product based on the dew condensation state estimated by the estimation unit.

7. The information processing apparatus according to claim 6, further comprising:
a transmission unit configured to transmit
a determination result of the disease risk determination unit to a user apparatus.

8. An information processing method, comprising:
acquiring solar radiation amount data indicating an amount of solar radiation to a greenhouse measured by a solar radiation amount sensor and relative humidity data indicating a relative humidity in the greenhouse; and
estimating a dew condensation state in a cultivated product in the greenhouse based on the solar radiation amount data and the relative humidity data.

## Patentansprüche

1. Informationsverarbeitungsvorrichtung, umfassend:
eine Datenerfassungseinheit (420), die so konfiguriert ist, dass sie Sonnenstrahlungsmengendaten, die eine Menge von Sonnenstrahlung für ein Gewächshaus (10) angeben, die von einem Sonnenstrahlungsmengensensor (22) gemessen wird, und Daten bezüglich relativer Feuchtigkeit erfasst, die eine relative Feuchtigkeit im Gewächshaus angeben; und
eine Schätzeinheit (452),
**dadurch gekennzeichnet, dass** die Schätzeinheit (452) zum Schätzen eines Taukondensationszustands in einem Anbauprodukt im Gewächshaus (10) basierend auf den Sonnenstrahlungsmengendaten und den Daten bezüglich relativer Feuchtigkeit konfiguriert ist.

2. Informationsverarbeitungsvorrichtung nach Anspruch 1,
wobei die Datenerfassungseinheit ferner zum Erfassen von Temperaturdaten konfiguriert ist, die eine Temperatur im Gewächshaus angegeben, und
die Schätzeinheit zum Schätzen des Taukondensationszustands basierend auf den Temperaturdaten zusätzlich zu den Sonnenstrahlungsmengendaten und den Daten bezüglich relativer Feuchtigkeit konfiguriert ist.

3. Informationsverarbeitungsvorrichtung nach Anspruch 1 oder 2,
wobei die Schätzeinheit zum Schätzen des Taukondensationszustands basierend auf den Sonnenstrahlungsmengendaten und den Daten bezüglich relativer Feuchtigkeit für eine späteste vorbestimmte Zeit konfiguriert ist.

4. Informationsverarbeitungsvorrichtung nach einem der Ansprüche 1 bis 3, ferner umfassend:
eine Lerneinheit, die zum Durchführen von maschinellem Lernen unter Verwendung der Sonnenstrahlungsmengendaten und der Daten bezüglich relativer Feuchtigkeit als Eingabedaten und unter Verwendung von Messdaten bezüglich des Taukondensationszustands im Anbauprodukt als Lehrdaten konfiguriert ist,
wobei die Schätzeinheit so konfiguriert ist, dass sie den Taukondensationszustand durch Anwenden der Sonnenstrahlungsmengendaten und der Daten bezüglich relativer Feuchtigkeit auf ein durch die Lerneinheit erhaltenes Modell schätzt.

5. Informationsverarbeitungsvorrichtung nach einem der Ansprüche 1 bis 4,
wobei die Schätzeinheit ferner so konfiguriert ist, dass sie den Taukondensationszustand wenigstens basierend auf einer Dichte des Anbauprodukts, einer Fläche des Gewächshauses, Wetterinformationen, einem Blaszustand im Gewächshaus und einem Belüftungszustand im Gewächshaus schätzt.

6. Informationsverarbeitungsvorrichtung nach einem der Ansprüche 1 bis 5, ferner umfassend:
eine Erkrankungsrisikobestimmungseinheit, die zum Bestimmen eines Erkrankungsrisikos des Anbauprodukts basierend auf dem von der Schätzeinheit geschätzten Taukondensationszustand konfiguriert ist.

7. Informationsverarbeitungsvorrichtung nach Anspruch 6, ferner umfassend:
eine Sendeeinheit, die zum Senden eines Bestimmungsergebnisses der Erkrankungsrisikobestimmungseinheit an eine Benutzervorrichtung konfiguriert ist.

8. Informationsverarbeitungsverfahren, umfassend:
Erfassen von Sonnenstrahlungsmengendaten, die eine Menge von Sonnenstrahlung für ein Gewächshaus angeben, die von einem Sonnenstrahlungsmengensensor gemessen wird, und Daten bezüglich relativer Feuchtigkeit, die eine relative Feuchtigkeit im Gewächshaus angeben; und
Schätzen eines Taukondensationszustands in einem Anbauprodukt im Gewächshaus basierend auf den Sonnenstrahlungsmengendaten und den Daten bezüglich relativer Feuchtigkeit.

## Revendications

1. Appareil de traitement d'informations, comprenant :
une unité d'acquisition de données (420) configurée pour acquérir des données de quantité de rayonnement solaire indiquant une quantité de rayonnement solaire vers une serre (10) mesurée par un capteur de quantité de rayonnement solaire (22) et des données d'humidité relative indiquant une humidité relative dans la serre ; et
une unité d'estimation (452),
**caractérisé en ce que** l'unité d'estimation (452) est configurée pour estimer un état de condensation de rosée dans un produit cultivé dans la serre (10) sur la base des données de quantité de rayonnement solaire et des données d'humidité relative.

2. Appareil de traitement d'informations selon la revendication 1,
l'unité d'acquisition de données étant en outre configurée pour acquérir des données de température indiquant une température dans la serre, et l'unité d'estimation étant configurée pour estimer l'état de condensation de rosée sur la base des données de température en plus des données de quantité de rayonnement solaire et des données d'humidité relative.

3. Appareil de traitement d'informations selon la revendication 1 ou 2,
l'unité d'estimation étant configurée pour estimer l'état de condensation de rosée sur la base des données de quantité de rayonnement solaire et des données d'humidité relative pour un dernier temps prédéterminé.

4. Appareil de traitement d'informations selon l'une quelconque des revendications 1 à 3, comprenant en outre :
une unité d'apprentissage configurée pour réaliser un apprentissage automatique en utilisant les données de quantité de rayonnement solaire et les données d'humidité relative comme données d'entrée et en utilisant les données de mesure sur l'état de condensation de rosée dans le produit cultivé comme données d'enseignant,
l'unité d'estimation étant configurée pour estimer l'état de condensation de rosée en appliquant les données de quantité de rayonnement solaire et les données d'humidité relative à un modèle obtenu par l'unité d'apprentissage.

5. Appareil de traitement d'informations selon l'une quelconque des revendications 1 à 4,
l'unité d'estimation étant en outre configurée pour estimer l'état de condensation de rosée sur la base d'au moins un élément parmi une densité du produit cultivé, une surface de la serre, des informations météorologiques, une condition de soufflage dans la serre et une condition de ventilation dans la serre.

6. Appareil de traitement d'informations selon l'une quelconque des revendications 1 à 5, comprenant en outre :
une unité de détermination du risque de maladie configurée pour déterminer un risque de maladie du produit cultivé sur la base de l'état de condensation de rosée estimé par l'unité d'estimation.

7. Appareil de traitement d'informations selon la revendication 6, comprenant en outre :
une unité de transmission configurée pour transmettre un résultat de détermination de l'unité de détermination du risque de maladie à un appareil utilisateur.

8. Procédé de traitement d'informations, comprenant :
l'acquisition de données de quantité de rayonnement solaire indiquant une quantité de rayonnement solaire vers une serre mesurée par un capteur de quantité de rayonnement solaire et de données d'humidité relative indiquant une humidité relative dans la serre ; et
l'estimation d'un état de condensation de rosée dans un produit cultivé dans la serre sur la base des données de quantité de rayonnement solaire et des données d'humidité relative.
